# EUROPEAN PATENT SPECIFICATION

(11) **EP 1 672 251 B1**
(45) Date of publication and mention of the grant of the patent: **20.04.2011**
(21) Application number: 05110858.7
(22) Date of filing: 17.11.2005
(51) Int. Cl.: F16H 59/02, B60K 28/10, F02N 11/10

(54) **Electronic automated gearbox and method of operation**
Electronisches automatisierte Schaltgetriebe und Verfahren zur Steuerung
Boîte de vitesses automatique electronique et procédé de commande

(30) Priority: 15.12.2004 IT MI20042382
(43) Date of publication of application: 21.06.2006
(73) Proprietor: IVECO S.p.A., 10156 Torino (IT)
(72) Inventor: Sirianni, Giuseppe, 10036 Settimo Torinese (IT); Vaglio, Paolo, 10129 Torino (IT)
(74) Representative: Borsano, Corrado

(56) References cited:
- EP-A- 1 043 521
- EP-A- 1 193 424
- DE-A1- 10 024 920
- DE-A1- 10 059 277
- DE-A1- 10 059 279
- DE-A1- 19 732 924
- DE-A1- 19 903 148
- DE-A1- 19 935 956
- DE-U1-202004 004 151
- US-A1- 2004 225 430
- PATENT ABSTRACTS OF JAPAN vol. 2002, no. 04, 4 August 2002 (2002-08-04) & JP 2001 349268 A (DENSO CORP), 21 December 2001 (2001-12-21)

## Description

### SCOPE OF THE INVENTION

This invention relates to a method of operating an automated stage-geared gearbox for a motor vehicle and a method for starting an engine in a vehicle equipped with an automated stage-geared gearbox.

### PRIOR ART

Vehicles, and in particular industrial vehicles are often equipped with an automated stage-geared gearbox, wherein a series of actuating elements, including elements to open and close the clutch, and elements for shifting gear, are controlled by an electronic control system that is capable of shifting gear as required on the basis of conditions that are monitored by measuring a number of engine operating parameters; this type of gearbox is easier to construct and is more efficient than conventional automatic gearboxes.

The gearboxes that are most frequently used generally have a series of characteristics. One is the possibility of operating either in automatic mode, in which the system controls gear shifting as described above (except for reverse gear, which is selected by the driver using a specific lever) or in manual mode, in which the driver selects the gear by means of the above-mentioned lever, which has shift positions for upshifting and downshifting, as well as the neutral and reverse positions. The driver requests to switch from manual to automatic operating mode by moving the lever to a specific request position, whereas the switchover in the opposite direction is effected when the driver requests a gear shift: in that case the manual mode is maintained.

Another characteristic is the initialization step: before the engine can be started, the system must recognize its current status (neutral or gear engaged), in order to enable the starting, after opening the clutch if necessary. One solution used in the prior art known from DE 199 03 148 A, consists of activating the initialisation step, after requesting starting with the key, by applying pressure to the brake pedal. The pressure on the pedal is also a request to start, and must be maintained until the engine has been started.

The solutions known in the prior art are not entirely satisfactory, in terms of ease of use by the driver. The need to keep the pedal pressed down until the engine has started is inconvenient. Moreover, drivers who are not familiar with the use of this type of gearbox may not be aware of the need to press the pedal.

### SUMMARY OF THE INVENTION

The problems described above have now been solved by a method for enabling the engine starting in a vehicle equipped with an electronic automated stage-geared gearbox system for a motor vehicle, comprising the following steps:
detection of an action on a control element, preferably the brake pedal;
repetition of the previous step if no pressure is detected, or enabling of starting if the action is detected;
characterized in that when the starting is enabled the engine can be started even if said control element is released (for example, if the brake pedal is released before the engine starts).

The invention relates in particular to what recited in the attached claims .

### LIST OF DRAWINGS

The invention will now be illustrated through a detailed description of the preferred but not exclusive embodiments, furnished merely by way of example, with the aid of the drawings attached, of which:
figure 1 is a schematic diagram of a map of the positions that may be assumed by a control lever of an automated gearbox used to implement the method according to a particular embodiment of the invention;
figure 2 is a schematic diagram of a procedure for starting the engine according to this invention.

### DETAILED DESCRIPTION OF AN EMBODIMENT

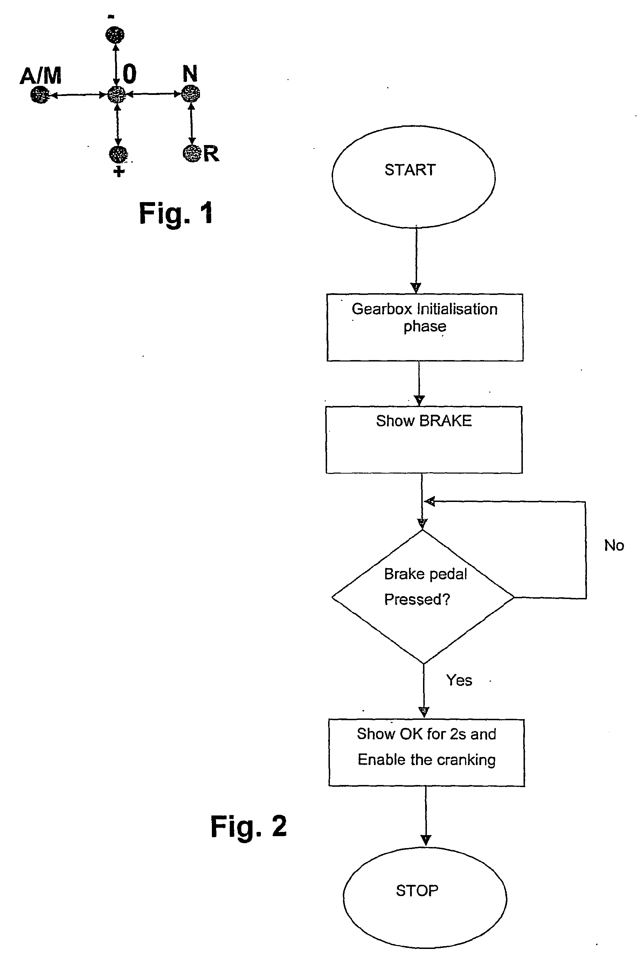

Figure 1 is a schematic diagram of a possible map showing the positions that may be assumed by a control lever of an automated gearbox that operates according to the invention.

Position 0 is the normal position of the lever during normal driving conditions, both in manual operating mode and in automatic mode. Position N is the neutral position, and position R is the reverse gear. These positions can be selected by the driver and the lever remains in the position until the driver moves it again, as in conventional systems. The other operating positions are the positions +, -, A/M, that can be accessed from the position 0, to which the lever returns as soon as it is released by the driver. When the lever is in the positions + and - a command is sent to the gearbox system to shift up or down respectively. If said command is sent with the system operating in automatic mode, it automatically switches to manual mode, and automatic mode can only be restored if a specific request is sent by the driver. What set forth above may be implemented in a manner similar to the systems and methods of operation known in the art. When the lever is in the position A/M a command is sent to the system to switch from automatic mode to manual mode or vice versa.

According to a preferred embodiment, the invention also relates to an electronic automated stage-geared gearbox system for a motor vehicle, capable of operating in an automatic mode, in which the system automatically controls gear shifting, or in a manual mode, in which each gear shift is specifically requested by the driver of the vehicle, characterized in that it comprises means for detecting a request to switch from automatic mode to manual mode that is not sent in conjunction with a request to shift or disengage the gear and means for performing said switchover.

The system may comprise a control device operated by the driver, capable of generating a request (which may be a suitable signal) to switch to manual mode without a request to shift gear; one example is the control lever described above, but any other type of device may be used.

The system also preferably comprises a display unit, capable of displaying information to the driver about the status of the system, such as which gear is engaged, whether it is in automatic or manual mode, the presence of any malfunctions. The various system components, such as the display unit, any electronic processing unit, the control device may be connected together and exchange data via a common line of the vehicle, that also connects the system to the various actuators.

The various means mentioned above may be devices, or programs capable of producing the effects described above when run on a computer such as the system according to the invention as a whole may be regarded .

The invention relates to a method for starting the engine, that may according to a particular embodiment also be performed by an automated gearbox system as described above.

Figure 2 illustrates a possible sequence of operations that may be carried out according to this method. The start of the procedure may coincide with a specific request by the driver, such as for example the turning of the start key. This is followed by a step in which the vehicle's automated gearbox system is initialised, during which the system verifies the status of the various gearbox components, in order to function correctly, i.e. whether or not the gear is engaged, whether the clutch is open or closed, the current operating mode of the system; the initialization step also regards other components, for example the drive control or ABS systems to which the gearbox system is connected via the vehicle's data exchange network or line. The method preferably comprises a step in which a message is displayed, for example by means of a display unit, advising the driver to operate the control element, for example to press the brake pedal, to signal to the gearbox control unit that the driver is in the vehicle in order to enable the starting. Once the system has verified this condition, it enables the starting, which remains enabled even if the pedal is released. A message signalling completed verification may also be displayed to allows the driver to release the control element without any interruption of subsequent operations. Enabling may comprise the generation of a specific signal. The engine can then be started automatically, for example by a specific engine control module, or in response to a further specific request.

The invention therefore also relates to a gearbox system capable of carrying out the method described above. This may be implemented by a computer program capable of carrying out the operations described above when run on a control system as described herein. Said program constitutes a particular aspect of the invention.

The novel part of the program described above may be added as an integration or modification to an existing program used to implement the control functions known in the prior art, for example those integrated into a known gearbox control system.

From the description set forth above it will be possible for the person skilled in the art to embody said software using the ordinary programming techniques known in the prior art.

## Claims

1. Method for enabling the starting of the engine of a vehicle equipped with an electronic automated stage-geared gearbox system for a motor vehicle, comprising the following steps:
detection of an action on a control element;
repetition of the previous step if no pressure is detected, or enabling of the starting if the action is detected;
**characterized in that** the enabling of the starting makes the starting possible even after release of said control element.

2. Method according to claim 1 in which said control element is the brake pedal.

3. Method according to claim 1 or 2 comprising the displaying, on a display unit, of a message inviting the driver to operate the control element before an action is detected on the control element.

4. Electronic automated stage-geared gearbox system for a vehicle that carries out a method according to any preceding claim.

5. System according to claim 4, capable of operating in an automatic mode, in which the system automatically controls gear shifting, or in a manual mode, in which each gear shift is specifically requested by the driver of the vehicle, **characterized in that** it comprises means for detecting a request to switch from automatic mode to manual mode that is not sent in conjunction with a request to shift or disengage the gear and means for performing said switch over.

6. System according to claim 5 comprising a control device operated by the driver, that generates a request to switch to manual mode without a request to shift gear.

7. System according to claim 5 or 6 comprising a display unit, capable of displaying information to the driver about the status of the system.

8. Vehicle equipped with a system according to any of claims 4-7.

## Patentansprüche

1. Verfahren zum Freigeben des Starts der Maschine eines Fahrzeugs, das mit einem elektronischen automatisierten Stufengetriebesystem für ein Kraftfahrzeug ausgestattet ist, das die folgenden Schritte umfasst:
Detektion einer Handlung an einem Steuerelement;
Wiederholung des vorhergehenden Schritts, wenn kein Druck detektiert wird, oder Freigeben des Starts, wenn die Handlung detektiert wird;
**dadurch gekennzeichnet, dass** das Freigeben des Starts das Starten auch nach Lösen des Steuerelements möglich macht.

2. Verfahren nach Anspruch 1,
bei dem das Steuerelement das Bremspedal ist.

3. Verfahren nach den Ansprüchen 1 oder 2,
das das Anzeigen einer Nachricht an einer Anzeigeeinheit umfasst, die den Fahrer einlädt, das Steuerelement zu betätigen, bevor eine Handlung an dem Steuerelement detektiert wird.

4. Elektronisches automatisiertes Stufengetriebesystem für ein Fahrzeug, das ein Verfahren nach einem der vorhergehenden Ansprüche ausführt.

5. System nach Anspruch 4,
das in der Lage ist, in einem automatischen Modus, in welchem das System automatisch ein Gangschalten steuert, oder in einem manuellen Modus zu arbeiten, in welchem jede Gangschaltung von dem Fahrer des Fahrzeugs spezifisch angefordert wird, **dadurch gekennzeichnet, dass** es Mittel zum Detektieren einer Anforderung, von einem automatischen Modus in einen manuellen Modus umzuschalten, die nicht in Verbindung mit einer Anforderung, den Gang zu schalten oder auszurücken, gesendet wird, und Mittel zum Durchführen des Umschaltens umfasst.

6. System nach Anspruch 5,
das eine Steuereinrichtung umfasst, die von dem Fahrer betätigt wird und eine Anforderung erzeugt, ohne eine Anforderung, einen Gang zu schalten, in einen manuellen Modus zu schalten.

7. System nach Anspruch 5 oder 6,
das eine Anzeigeeinheit umfasst, die in der Lage ist, dem Fahrer Informationen über den Zustand des Systems anzuzeigen.

8. Fahrzeug, das mit einem System nach einem der Ansprüche 4 bis 7 ausgestattet ist.

## Revendications

1. Procédé pour permettre le démarrage du moteur d'un véhicule équipé d'un système de boîte de vitesse à étagement automatique pour un véhicule à moteur, comprenant les étapes suivantes :
détection d'une action sur un élément de commande ;
répétition de l'étape précédente si aucune pression n'est détectée, ou activation du démarrage si l'action est détectée ;
**caractérisé en ce que** l'activation du démarrage permet le démarrage, même après libération dudit élément de commande.

2. Procédé selon la revendication 1, dans lequel ledit élément de commande est la pédale de frein.

3. Procédé selon la revendication 1 ou 2, comprenant l'affichage, sur une unité d'affichage, d'un message invitant le conducteur à utiliser l'élément de commande avant la détection d'une action sur l'élément de commande.

4. Système de boîte de vitesse à étagement automatique électronique pour un véhicule qui exécute un procédé selon l'une quelconque des revendications précédentes.

5. Système selon la revendication 4, capable de fonctionner dans un mode automatique, dans lequel le système commande automatiquement le passage de vitesse, ou dans un mode manuel, dans lequel chaque passage de vitesse est spécifiquement demandé par le conducteur du véhicule, **caractérisé en ce qu'**il comprend un moyen pour détecter une demande de passage du mode automatique au mode manuel qui n'est pas envoyée conjointement avec une demande de passage de vitesse ou de débrayage et un moyen pour exécuter ladite permutation.

6. Système selon la revendication 5, comprenant un dispositif de commande utilisé par le conducteur qui génère une demande pour passer au mode manuel sans demande de passage de vitesse.

7. Système selon la revendication 5 ou 6, comprenant une unité d'affichage capable d'afficher des informations à l'intention du conducteur concernant l'état du système.

8. Véhicule équipé d'un système selon l'une quelconque des revendications 4 à 7.
